Europäisches Patentamt

European Patent Office

Office européen des brevets

(19)

(11) Numéro de publication: **0 015 800**
**B1**

(12) **FASCICULE DE BREVET EUROPEEN**

(45) Date de publication du fascicule du brevet: **02.03.83**

(51) Int. Cl.³: **A 01 C 7/00, A 01 B 49/04**

(21) Numéro de dépôt: **80400223.6**

(22) Date de dépôt: **18.02.80**

(54) Procédé et machine pour l'ensemencement.

(30) Priorité: **01.03.79 FR 7906031**

(43) Date de publication de la demande:
**17.09.80 Bulletin 80/19**

(45) Mention de la délivrance du brevet:
**02.03.83 Bulletin 83/9**

(84) Etats contractants désignés:
**DE GB IT NL**

(56) Documents cités:
**BE - A - 666 747**
**DE - A - 2 301 374**
**DE - C - 401 879**
**FR - A - 2 204 101**

(73) Titulaire: **KUHN S.A.**
**4, Impasse des Fabriques**
**F-67700 Saverne (FR)**

(72) Inventeur: **Werner, Anton**
**Rue du Haut-Barr**
**F-67700 Saverne (FR)**

(74) Mandataire: **Heusch, Pierre**
**Kuhn S.A. 4, Impasse des Fabriques**
**F-67700 Saverne (FR)**

Courier Press, Leamington Spa, England.

# Procédé et machine pour l'ensemencement

La présente invention concerne un procédé et un machine d'ensemencement perfectionnés, de préférence combinée avec une machine de travail du sol.

Les machines combinées permettant à la fois de travailler le sol et de l'ensemencer, comportent généralement à l'avant soit des outils fixes tels que des dents de cultivateurs, soit des outils mobiles tels que des bêches entraînées en rotation autour d'un axe horizontal ou des dents entraînées autour d'axes verticaux. Immédiatement derrière ces outils sont prévus des dispositifs permettant d'introduire la semence dans le sol. Ces dispositifs présentent généralement la forme de tube, aboutissent dans la zone dans laquelle la terre travaillée par les outils est rejetée vers l'arrière. La semence est ainsi, en partie au moins, mélangé au flux de terre avant qu'il retombe sur le sol. Les machines décrites ci-dessus sont de plus généralement suivies d'un rouleau ayant la double fonction de tasser le sol à ensemencer et de régler la profondeur de travail des outils travaillant la terre.

Ces machines présentent l'inconvénient que la semence n'est pas déposée dans ou sur le sol dans les conditions les plus favorables pour sa levée. En effet, la profondeur à laquelle chaque graine est déposée dans le sol est rarement constante. Ceci est dû d'une part au fait que lesdites graines sont libérées dans le flux de terre rejeté vers l'arrière par les outils situés à l'avant de la machine et d'autre part au fait que lesdites graines sont déposées sur un sol disloqué et non tassé. Lesdites graines peuvent ainsi tomber dans les interstices existant entre deux mottes de terre. Or on sait qu'une graine située à plus de 10 à 15 centimètres en-dessous de la surface du sol, n'arrive pas à lever. Par ailleurs, le fait d'avoir un sol trop disloqué empêche l'humidité du sous-sol de remonter vers la surface par capillarité pour nourrir les graines. Un sol disloqué se dessèche également très rapidement en l'absence de pluie, ce qui nuit à la bonne levée des graines.

Dans la demande DE—A—2.301.374 est décrite une machine à semer comportant un rouleau qui sert à régler la profondeur de travail d'un outil de prélèvement de la terre en forme de biseau fixe, une bande transporteuse située derrière ledit outil de prélèvement qui amène la terre prélevée dans la zone d'action de deux rouleaux émietteurs et un mécanisme à semer qui dépose la semence avant que la terre émiettée ne retombe sur le sol. Une telle machine présente sensiblement des inconvénients identiques à ceux des machines décrites ci-dessus. En effet, la surface du sol découverte pendant le prélèvement d'une couche de terre par ledit outil de prélèvement est très inégale et comporte de nombreuses petites crevasses qui résultent du fait que les nombreuses petites pierres que comporte le sol sont entraînées par frottement par l'outil de prélèvement et creusent ainsi lesdites crevasses.

Ainsi, cette machine ne peut pas non plus générer un bon lit de semence réunissant toutes les conditions pour une bonne levée des graines ou de la semence.

La présente invention a pour objet un procédé ainsi qu'une machine permettant la mise en oeuvre dudit procédé et remédiant aux inconvénients cités ci-dessus. Le procédé selon l'invention consiste en effet à prélever une certaine quantité de terre à la surface du sol, à tasser le sol après ce prélèvement, à déposer de la semence sur le sol tassé, puis à recouvrir cette semence par la terre préalablement prélevée à la surface du sol.

Selon le procédé conforme à l'invention, une fois la terre prélevée, elle peut être projetée sur le sol tassé après que la semence y ait été déposée. Il est également possible de travailler le sol avant d'en prélever une certaine quantité destinée à recouvrir la semence d'une couche de terre d'épaisseur aussi uniforme que possible.

La machine permettant la mise en oeuvre de ce procédé et comportant un organe de prélèvement de la terre qui s'étend sensiblement perpendiculairement au sens d-avancement de ladite machine, est caractérisée par le fait que ledit organe de prélèvement est entraîné en rotation autour d'un axe sensiblement horizontal, de telle sorte que la terre qu'il prélève passe au-dessus de son axe, un rouleau situé derrière ledit organe et dont l'axe s'étend sensiblement parallèlement à l'axe dudit organe de prélèvement, des moyens pour distribuer des graines ou de la semence derrière le rouleau ainsi que des moyens destinés à guider vers le sol derrière lesdits moyens pour distribuer des graines ou de la semence, la terre prélevée à l'avant de la machine en la faisant passer par-dessus le rouleau.

L'intérêt de ce procédé et de la machine pour sa mise en oeuvre réside essentiellement dans le fait que les graines ou la semence soient recouvertes d'une couche de terre qui présente une épaisseur sensiblement constante du fait que lesdites graines ou la semence sont déposées sur un sol nivelé préalablement tassé, ou du moins légèrement rappuyé grâce à l'action d'un rouleau. Le procédé décrit ci-dessus présente également l'avantage qu'il est possible de recouvrir lesdites graines d'une couche de terre présentant un degré de granulométrie prédéterminé qui est avantageusement relativement fin. De même, il est possible selon l'invention d'éviter tout mélange des graines ou de la semence avec la terre destinée à les recouvrir, étant donné que lesdites graines ou la semence sont déposées sur un sol tassé avant d'être recouvertes par la terre prélevée à l'avant de la machine.

La couche de terre tassée sur laquelle sont déposées les graines présente de plus le double avantage de limiter l'assèchement du sous-sol même en période de sécheresse et de permettre la remontée par capillarité de l'humidité contenue dans ledit sous-sol. Grâce au procédé et à la machine selon l'invention les graines et la semence sont disposées dans le sol dans une zone où elles disposent à la fois d'une part de l'humidité nécessaire à leur développement et d'autre par de l'air et de la chaleur passant à travers la couche de terre meuble qui les recouvre de sorte que toutes les conditions d'une bonne levée sont remplies.

Le procédé et la machine selon l'invention présentent également l'avantage qu'il est possible de faire varier le type de semis selon que la semence est déposée plus ou moins près du rouleau. En effet, si la semence est déposée immédiatement derrière le rouleau sur une surface nivelée et rappuyée, les graines ont le temps de se répartir largement sur cette surface avant d'être recouvertes par le flux de terre prélevé à l'avant de la machine et l'on obtiendra un résultat comparable à celui d'un semis à la volée.

Au contraire, si la semence est déposée plus loin derrière le rouleau, c'est-à-dire immédiatement devant le flux de terre prélevé à l'avant de la machine et passant par-dessus le rouleau, les graines n'ont pas le temps de s'éparpiller sur la surface du sol rappuyée par le rouleau. Elles sont en effet immédiatement recouvertes par le flux de terre précité de sorte que le résultat obtenu est comparable à celui d'un semis en lignes.

D'autres caractéristiques et avantages de l'invention apparaîtront ci-après plus en détails dans la description nullement limitative de plusieurs exemples de réalisation de l'invention et en référence aux dessins annexés sur lesquels

—La figure 1 représente schématiquement une vue latérale d'une première variante de réalisation de l'invention,
—La figure 2 représente schématiquement une vue latérale d'une seconde variante de réalisation de l'invention,
—La figure 3 représente schématiquement une vue latérale d'une troisième variante de réalisation de l'invention.

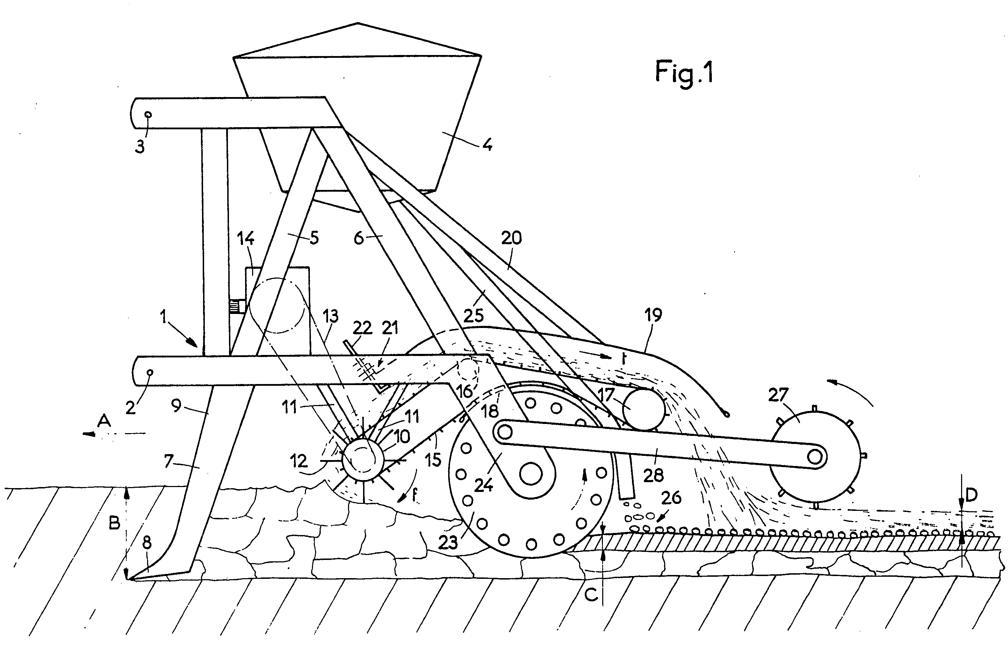

Telle qu'elle est représentée sur la figure 1 la machine selon l'invention comporte un châssis (1) équipé à l'avant de dispositifs (2 et 3) permettant de l'atteler à un tracteur non représenté afin qu'il puisse déplacer la machine dans le sense de la flèche (A). Un coffre (4) destiné à contenir des graines ou de la semence est fixé dans la partie supérieure du châssis (1) au moyen de supports (5 et 6).

A l'avant de la machine est monté au moins un outil fixe (7) du type dent de sous-soleuse ou de chisel distinée à pénétrer dans le sol sur une profondeur B d'environ 40 centimètres pour morceler le sol. Si la machine comporte plusieurs de ces outils (7), ceux-ci sont montés sur le châssis (1) en s'étendant les uns à côté des autres perpendiculairement au sens d'avancement (A) de la machine. La partie inférieure (8) des outils (7) est située plus en avant que leur partie supérieure (9) par laquelle lesdits outils (7) sont fixés au châssis (1). Sans sortir du cadre de l'invention, il est possible de prévoir plusieurs rangées d'outils (7) qui sont alors de préférence disposés en quinconce.

Derrière les outils (7) est prévue une petite fraise (10) dont l'axe s'étend sous la partie inférieure du châssis (1) et perpendiculairement au sens d'avancement (A) de la machine. Cette fraise (10), reliée au châssis (1) au moyen d'entretoises (11), est munie de pales (12) destinées à prélever une partie de la terre préalablement morcelée par les outils (7). Dans ce but l'axe de la fraise (10) est disposé de telle sorte que l'extrémité libre des pales (12) pénètre sous la surface du sol morcelé par les dents (7) sur une faible profondeur de l'ordre de 5 à 10 centimètres. En effet, les pales (12) ont également pour fonction de broyer la terre qu'elles prélèvent. A cet effet la fraise (10) est entraînée dans le sens de la flèche (f) à une vitesse de rotation élevée, grâce à une transmission du type à chaîne (13) par exemple. Cette chaîne (13) est mise en mouvement à partir d'un carter de renvoi (14) monté sur le châssis (1) et directement relié à la prise de force du tracteur. Tout autre moyen de transmission tel par exemple que des roues dentées ou des arbres de transmission peut être utilisé pour entraîner la fraise (10).

La terre prélevée par la fraise (10) et projetée par-dessus son axe de rotation, est déposée sur une sorte de tapis roulant (15). Ce dernier est par exemple constitué de courroies passant entre les pales (12) de la fraise (10). Les courroies sont entraînées à partir de l'axe de la fraise (10), leur vitesse pouvant être identique ou différente de celle de ladite fraise (10). Le tapis roulant (15) dont les courroies peuvent être crantées vers l'extérieur, passe sur un premier galet (16) situé au-dessus et derrière l'axe de la fraise (10), puis sur un second galet (17) situé plus en arrière que le galet (16) et enfin autour d'une capot (18). La terre prélevée par la fraise (10) et déposée sur le tapis roulant (15) se déplaçant, dans sa partie supérieure dans le sens de la flèche (t), peut ainsi être déposée sur le sol lorsqu'elle arrive au niveau du galet (17). Un capot (19) relié au châssis (1) par des tirants (20) s'étend au-dessus du tapis roulant (15) et jusqu'à l'arrière de ce dernier.

A l'avant du capot (19) est prévu un dispositif (21) desiné à calibrer et à contrôler de débit du flux de terre qui doit être évacué vers l'arrière. Ce dispositif (21) est constitué par une plaque (22) s'étendant sur toute la longueur de la machine perpendiculairement au flux de terre projeté sur le tapis roulant (15) par la fraise (10). Cette plaque (22) peut être rapprochée ou éloignée du tapis roulant (15) de façon à réduire ou augmenter la fente délimitant le passage de la terre déplacée vers l'arrière par ledit tapis roulant (15).

Ce tapis roulant (15) s'étend au moins jusqu'au-dessus d'un rouleau à tiges (23) du type cage d'écureuil par exemple, prévu sous le capot (18). Ce rouleau (23) qui s'étend perpendiculairement au sens d'avancement (A) de la machine et parallèlement à l'axe de rotation de la fraise (10) est relié au châssis (1) au moyen de bras (24) s'étendant de part et d'autre de son extrémité. Le rouleau (23) est disposé au-dessous du tapis roulant (15) et peut ainsi tasser la terre préalablement morcelée par les outils (7) avant que la terre prélevée par la fraise (10) soit déposée sur le sol tassé. Le rouleau (23) permet aussi d'assurer le réglage de la profondeur de travail des outils (7).

Immédiatement derrière le rouleau (23) débouchent les tubes (25) passant entre les courroies du tapis roulant (15). Ces tubes (25) permettent aux graines ou à la semence (26) contenues dans le coffre (4) d'être déposées sur le sol. Le mécanisme de commande distribuant les graines ou la semence (26) peut être commandé par un dispositif de type connu non représenté et actionné par le rouleau (23) par exemple.

Selon une importante caractéristique de l'invention les graines ou la semence (26) sont déposées sur un sol tassé par le rouleau (23) sur une épaisseur (C) avant d'être recouvertes par la terre préalablement prélevée par la fraise (10) et transportée vers l'arrière par le tapis roulant (15). Grâce au dispositif de calibrage (21) prévu juste derrière la fraise (10), la quantité de terre qui vient recouvrir les graines ou la semence (26) est déterminée avec précision, ce qui permet de recouvrir lesdites graines (26), d'une couche de terre d'épaisseur (D) aussi constante que possible. L'épaisseur de cette couche est choisie pour que les conditions optimums de levée des graines soient réunies.

Par ailleurs le fait de déposer les graines ou la semence (26) sur un sol tassé par le rouleau (23) entre cer dernier et le flux de terre destiné à les recouvrir, permet de ne pas mélanger lesdites graines ou la semence (26) avec ladite terre. Ceci permet de garantir que chaque graine est située à une profondeur constante sous la surface du sol, à un endroit où elle peut à la fois capter l'humidité du sous-sol et être rechauffée par le soleil, dont les rayons viennent frapper la couche de terre d'épaisseur (D).

Afin de compléter la machine selon l'invention, cette dernière comporte à l'arrière un rouleau-suiveur (27) roulant sur le sol sous l'effet de l'avancement de la machine et relié au bras (24) du rouleau (23) au moyen de longs bras (28). Ce rouleau (27) a pour fonction de compacter légèrement la couche de terre recouvrant les graines ou la semence (26), afin de favoriser leur levée.

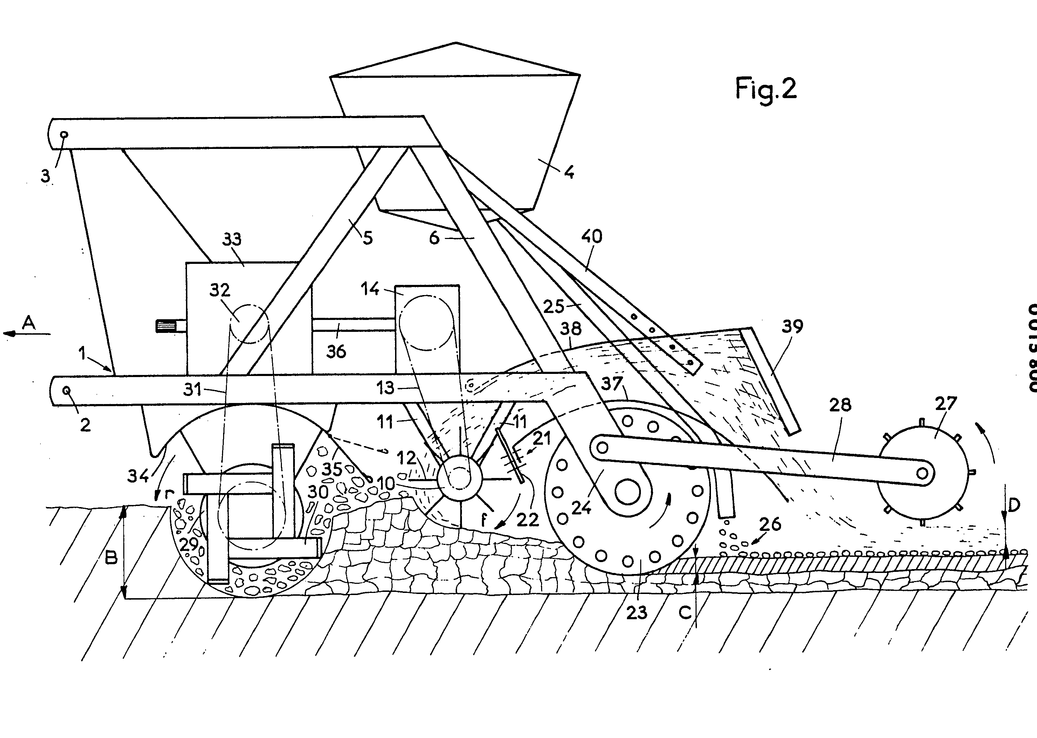

La figure 2 représente une variante de réalisation de l'invention semblable à la variante décrite en référence à la figure 1. De ce fait seuls les éléments différents seront décrits en détails, les éléments semblables portant les mêmes repères que ceux représentés sur la figure 1.

Telle qu'elle est représentée sur la figure 2 la machine selon l'invention comporte à l'avant une fraise rotative (29) dont les bêches (30) entraînées en rotation dans le sens de la flèche (r), travaillent le sol sur une profondeur (B) d'environ 25 à 30 centimètres. Cette fraise (29), reliée au châssis (1) de la machine, est entraînée par exemple à l'aide d'une chaîne (31) passant sur le pignon (32) d'un carter de renvoi (33) directement relié à la prise de force du tracteur déplaçant la machine dans son sens d'avancement (A). La fraise (29) dont l'axe de rotation s'étend sensiblement horizontalement et perpendiculairement au sens d'avancement (A) de la machine, est recouverte par un capot (34) dont la partie arrière (35) est articulée. Cette partie (35) traînant sur le sol permet de niveler grossièrement le terrain travaillé par les bêches (30) qui peuvent avantageusement être disposées hélicoïdalement le long de l'axe de la fraise (29).

Derrière cette fraise (29) est disposée une seconde fraise (10) de taille plus réduite et semblable à la fraise décrite en référence à la figure 1. L'entraînement de cette fraise (10) est assuré au moyen de la chaîne (13) et du carter (14) relié au carter (33) par un arbre (36). La structure et la fonction de la fraise (10) étant les mêmes que celles décrites en référence à l'exemple de réalisation de l'invention représenté sur la figure 1, ladite fraise (10) et sa fonction ne seront pas décrites à nouveau en détails.

La terre prélevée par les pales (12) de la fraise (10) est projetée vers l'arrière entre deux capots (37 et 38) s'étendant l'un au-dessus de l'autre et au-dessus du rouleau (23). Un dispositif de calibrage (21) du flux de terre prélevé par les pales (12) de la fraise (10) est prévu à l'avant du capot inférieur (37). Ce dispositif (21) comporte une plaque réglable (22) pouvant être rapprochée ou éloignée du capot supérieur (38) afin de réduire ou d'augmenter la fente délimitant le passage de la terre entre les capots (37 et 38).

A l'arrière du capot (38) est prévu un déflecteur (39) faisant un certain angle avec le capot (38). Ce déflecteur (39) a pour fonction de rabattre sur le sol la terre projetée entre les capots (37 et 38), tout en accroissant son degré d'émottage. L'angle d'inclinaison du déflecteur (39) est avantageusement réglable, indépendamment de l'inclinaison du capot (38) relié au châssis (1) de la machine au moyen de tirants (40) dont les extrémités inférieures sont pourvues de moyens permettant de relever ou d'abaisser ledit capot (38).

Sous le capot (37) est disposé le rouleau (23) destiné à tasser le sol broyé par les bêches (30) de la fraise (29). Sur le sol ainsi tassé sur une profondeur (C), sont déposées les graines ou la semence (26) grâce aux tubes (25) reliés au coffre (4) et passant à travers le capot (37). L'extrémité libre des tubes (25) s'étend à proximité immédiate du rouleau (23), derrière ce dernier et en avant de l'endroit où la terre prélevée par la fraise (10) retombe sur le sol en une couche d'épaisseur (D) aussi constante que possible. Les graines ou la semence (26) ont ainsi le temps de se répartir sensiblement uniformément sur le sol tassé de sorte que lorsque l'extrémité libre des tubes (25) est disposée comme décrit ci-dessus, le résultat du semis s'apparente au semis à la volée.

Comme dans la variante décrite en référence à la figure 1, un rouleau-suiveur (27) est prévu à l'arrière de la machine en y étant relié par des bras (28).

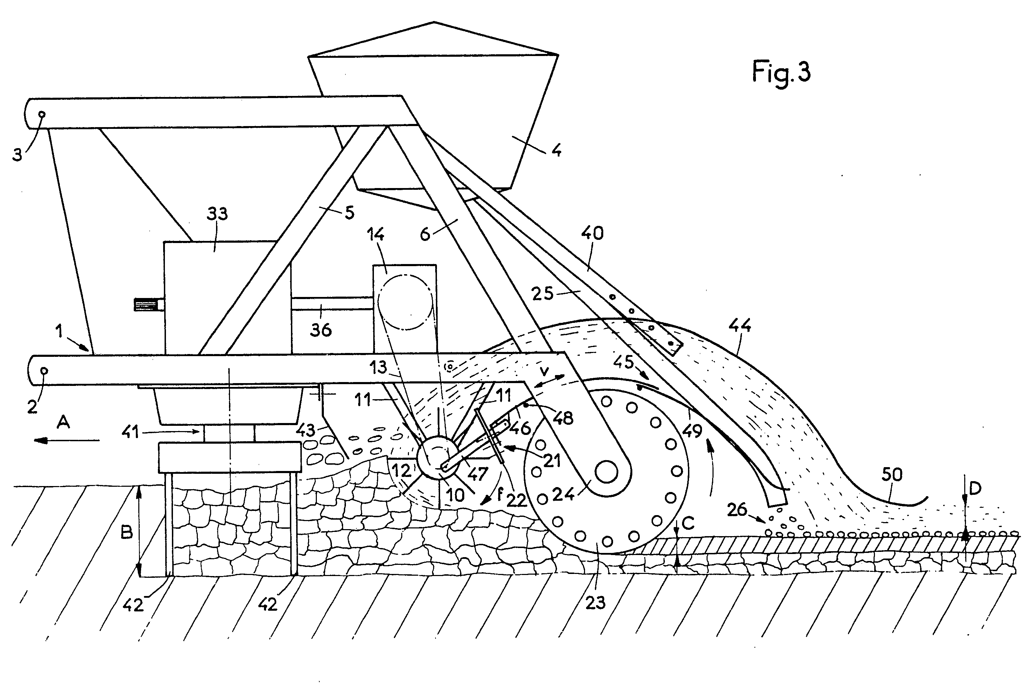

La figure 3 représente une variant supplémentaire de réalisation de l'invention. Cette variante est semblable à celles décrites précédemment de sorte que seuls les éléments nouveaux seront décrits en détails, les éléments semblables portant les mêmes repères que ceux indiqués sur les figures 1 et 2.

Telle qu'elle est représentée sur la figure 3, la machine selon l'invention comporte à l'avant une herse rotative (41) pourvue de dents (42) entraînées en rotation par paire autour d'axes verticaux disposés en lignes les uns à côté des autres sensiblement perpendiculairement au sens d'avancement (A) de la machine. La herse rotative (41) est fixée au châssis (1) et ses dents (42) sont entraînées en rotation grâce à des éléments de transmission non représentés, dont l'un est accouplé au carter de renvoi (33) directement relié à la prise de force du tracteur. En tournant les dents (42) broient la terre en la rejetant vers l'arrière de la herse où peut être prévue une grille (43) destinée à cribler la terre et à retenir les pierres. On évite ainsi que les pales (12) de la fraise (10) prélèvent ces pierres pour les rejeter vers l'arrière de la machine.

La fraise (10) est semblable à celle décrite en référence aux figures 1 et 2 et fonctionne de la même façon et dans le même but. Ses pales (12) projettent la terre prélevée derrière la herse (41) pour la faire passer au-dessus de l'axe de ladite fraise (10) et entre deux capots (44 et 45). Le capot (44) est semblable au capot (38) décrit en référence à la figure 2. Il est maintenu en place par des tirants (40) équipés de moyens permettant de la rapprocher ou de l'éloigner du capot (45). Afin d'éviter d'éventuels bourrages entre les capots (44 et 45), la partie avant (46) du capot (45) sur laquelle est monté le dispositif calibreur (21) est animée d'un mouvement de va-et-vient selon le sens des flèches (v). Ce mouvement de va-et-vient est assuré par une bielle (47) reliée d'une part à la fraise (10) et d'autre part à la partie avant (46) du capot (45). Ladite partie (46) s'étendant derrière la fraise (10) et au moins jusqu'au-dessus du rouleau (23), est guidée d'une part en s'appuyant sur une traverse (48) fixée au châssis (1) de la machine et d'autre part sur l'extrémité de la partie fixe (49) du capot (45). La vitesse de rotation de la fraise (10) étant assez élevée, la partie avant (46) du capot (45) va vibrer à une fréquence élevée évitant d'une part que la terre vienne se coller sur le capot (45) et favorisant d'autre part de déplacement de ladite terre vers l'arrière de la machine.

Le capot (45) recouvre le rouleau (23) disposé de la façon décrite et représentée en référence aux figures 1 et 2.

L'extrémité fixe (49) du capot (45) s'étendant vers l'arrière derrière le rouleau (23), est pourvue d'encoches dans lesquelles sont disposés les tubes (25) permettant aux graines ou à la semence (26) d'être déposées sur le sol tassé par ledit rouleau (23) sur une épaisseur (C). L'extrémité libre des tubes (25) étant disposée aussi près que possible en avant du flux de terre prélevé par la fraise (10), le type de semis que permet d'obtenir la machine représentée sur la figure 3 s'apparente au semis en lignes. En effet, les graines ou la semence (26) n'ont pas le temps de se répartir sur le sol tassé car elles sont immédiatement recouvertes d'une couche de terre d'épaisuer (D) aussi constante que possible, sans pour autant être mélangées à cette couche de terre.

Cette dernière peut avantageusement être légèrement tassée grâce à la forme arrondie de la partie inférieure (50) du capot (44) jouant en quelque sorte le rôle du rouleau (27) représenté sur les figures 1 et 2.

Bien que diverses variantes de réalisation de l'invention dont il a été question ci-dessus aient été décrites en référence aux figures 1, 2 et 3, il est bien évident que l'on pourra combiner entre aux de manière différente les divers éléments de ces variantes.

C'est ainsi qu'à titre d'exemple le tapis roulant (15) s'étendant derrière la fraise (10), au-dessus du rouleau (23) et représenté sur la figure 1, peut être associé à la machine représentée sur la figure 2 dont on supprimera le déflecteur (39) ou à la machine représentée sur la figure 3 dont on supprimera le dispositif faisant vibrer la partie avant (46) du capot (45). On pourra aussi équiper la machine représentée sur la figure 3 d'un rouleau-suiveur (27) tel que représenté sur les figures 1 et 2. Par ailleurs sur les machines représentées sur les figures 1 et 2, il est également possible de régler la position des tubes (25) de manière à ce que les graines ou la semence (26) puissent être déposées sur le sol en avant et à proximité immédiate du flux de terre prélevé par la fraise (10). On peut alors obtenir un semis du type semis en lignes avec les machines illustrées sur les figures 1 et 2. De même la machine de la figure 3 peut être adaptée pour le semis à la volée en rapprochant les extrémités libres des tubes (25) du rouleau (23).

Afin d'ajuster la quantité de terre rejetée vers l'arrière par la fraise (10), il est également possible, dans le cadre de la présente invention, de prévoir que ladite fraise (10) est réglable en hauteur afin que ses pales (12) interceptent plus au moins de terre. Dans le cas où la machine est équipée d'un tel dispositif de réglage de la hauteur de la fraise (10), le dispositif de calibrage (21) peut être supprimé.

Enfin, on notera que la machine selon l'invention peut également être employée pour l'ensemencement sans qu'elle soit équipée d'outils (7, 29, 41) prévus à l'avant. Dans ce cas, le terrain doit être prêt à l'ensemencement, c'est-à-dire qu'au moins la couche supérieure du sol doit être broyée.

## Revendications

1. Procéde d'ensemencement caractérisé par le fait

—qu'on prélève une certain quantité de terre à la surface du sol

—qu'on tasse le sol après ce prélèvement

—qu'on dépose de la semence sur le sol tassé et

—qu'on recouvre cette semence par la terre préalablement prélevée.

2. Procédé d'ensemencement selon la revendication 1, caractérisé par le fait qu'après avoir prélevé une certain quantité de terre à la surface du sol, on déplace cette terre pour la faire passer au-dessus d'un organe destiné à tasser le sol, qu'on dépose cette terre sur le sol tassé derrière ledit organe et qu'on dépose de la semence entre l'organe destiné à tasser le sol et le flux de terre destiné à venir se déposer sur le sol tassé.

3. Procédé d'ensemencement selon la revendication 1, caractérisé par le fait qu'après avoir prélevé une certaine quantité de terre à la surface du sol, on projette cette terre vers l'arrière de façon à la faire passer par-dessus un organe destiné à tasser le sol, on projette cette terre sur le sol tassé derrière ledit organe et on dépose de la semence entre l'organe destiné à tasser le sol et le flux de terre projeté sur ce dernier.

4. Procédé d'ensemencement selon l'une quelconque des revendications précédentes, caractérisé par le fait qu'on travaille la terre en profondeur avant son prélèvement.

5. Procédé d'ensemencement selon l'une quelconque des revendications précédentes, caractérisé par le fait qu'on tasse légèrement la terre déposée sur le sol après que la semence soit déposée dans ledit sol.

6. Machine pour la mise en oeuvre du procédé selon l'une quelconque des revendications précédentes, comportant un organe de prélèvement de la terre qui s'étend sensiblement perpendiculairement au sens d'avancement (A) de ladite machine, caractérisée par le fait que ledit organe de prélèvement (10) est entraîné en rotation autour d'un axe sensiblement horizontal, de telle sorte que la terre qu'il prélève passe au-dessus de son axe, un rouleau (23) situé derrière ledit organe (10) et dont l'axe s'étend sensiblement parallèlement à l'axe dudit organe de prélèvement (10), des moyens (25) pour distribuer des graines ou de la semence (26) derrière le rouleau (23) ainsi que des moyens (15, 37, 38, 39, 44, 45) desinés à guider vers le sol derrière lesdits moyens (25) pour distribuer des graines ou de la semence (26), la terre prélevée à l'avant de la machine.

7. Machine selon la revendication 6, caractérisée par le fait que l'organe de prélèvement (10) est du type comportant des pales (12) destinées à prélever la terre.

8. Machine selon la revendication 6 ou 7, caractérisée par le fait que les moyens destinés à guider vers le sol la terre prélevée, comportent un dispositif du type tapis roulant (15) s'étendant derrière l'organe de prélèvement (10) et au moins jusqu'au-dessus du rouleau (23).

9. Machine selon la revendication 6 ou 7, caractérisée par le fait que les moyens destinés à guider vers le sol la terre prélevée, comportent un dispositif du type capot vibrant (46) s'étendant derrière l'organe de prélèvement (10) et au moins jusqu'au-dessus du rouleau (23).

10. Machine selon la revendication 6, 7, 8 ou 9, caractérisée par le fait que les moyens destinés à guider vers le sol la terre prélevée, comportent un déflecteur (39) situé derrière le rouleau (23) et destinée à rabattre vers le sol la terre prélevée à l'avant.

11. Machine selon la revendication 10, caractérisée par le fait que l'orientation du déflecteur (39) est réglable.

12. Machine selon l'une quelconque des revendications 6 à 11, caractérisée par le fait qu'elle comporte un dispositif (21) pour calibrer le flux de terre déplacé depuis l'avant vers l'arrière de la machine en passant au-dessus du rouleau (23).

13. Machine selon la revendication 12, caractérisée par le fait que le dispositif de calibrage (21) est réglable.

14. Machine selon l'une quelconque des revendications 6 à 13, caractérisée par le fait que les moyens pour distribuer la semence sont constitués par des tubes (25) dont la position est ajustable.

15. Machine selon l'une quelconque des revendications 6 à 14, caractérisée par le fait qu'un rouleau supplémentaire (27) est prévu à l'arrière de la machine.

16. Machine selon l'une quelconque des revendications 6 à 15, caractérisée par le fait qu'elle comporte en avant de l'organe de prélèvement (10) des outils de travail du sol (7, 30, 42) destinés à pénétrer dans ce dernier à une profondeur supérieur à celle à laquelle pénètre l'organe de prélèvement (10).

17. Machine selon la revendication 16, caractérisée par le fait que les outils de travail (30, 42) sont entraînés en rotation autour d'au moins un axe.

18. Machine selon la revendication 16 ou 17, caractérisée par le fait qu'elle comporte une grille (43) ou analogue disposée entre l'organe de prélèvement (10) et les outils de travail du sol (7, 30, 42).

**Patentansprüche**

1. Verfahren zum Säen, dadurch gekennzeichnet, dass man

—eine gewisse Erdmenge vom Erdboden anhebt
—nach dieser gewissen Erdmenge-Anhebung, den Erdboden andrückt
—Saat auf den angedrückten Erdboden ablegt, und
—die abgelegte Saat mit der gewissen angehobenen Erdmenge überdeckt.

2. Verfahren zum Säen nach Anspruch 1, dadurch gekennzeichnet, dass man, nachdem eine gewisse Erdmenge vom Erdboden angehoben worden ist, diese angehobene Erdmenge über ein Erdbodenandrücksorgan fördert, diese angehobene Erdmenge auf den angedrückten Erdboden hinter dem Erdbodenandrücksorgan ablegt, und Saat zwischen dem Erdbodenandrücksorgan und dem Erdstrom der den angedrückten Erdboden überdecken soll, ablegt.

3. Verfahren zum Säen nach Anspruch 1, dadurch gekennzeichnet, dass man, nachdem eine gewisse Erdmenge vom Erdboden angehoben worden ist, diese angehobene Erdmenge nach hinten über ein Erdbodenandrücksorgan wirft, diese angehobene Erdmenge auf den angedrückten Erdboden hinter dem Erdbodenandrücksorgan wirft, und Saat zwischen dem Erdbodenandrücksorgan und dem Erdstrom der auf den angedrückten Erdboden geworfen wird, ablegt.

4. Verfahren zum Säen nach einem der vorhergehenden Ansprüche, dadurch gekennzeichnet, dass man den Erdboden tief bearbeitet bevor eine gewisse Erdmenge vom Erdboden angehoben wird.

5. Verfahren zum Säen nach einem der vorhergehenden Ansprüche, dadurch gekennzeichnet, dass man die den Erdboden überdeckende Erdmenge leicht andrückt, nachdem die Saat auf diesen Erdboden abgelegt worden ist.

6. Maschine zur Durchführung des Verfahrens nach einem der vorhergehenden Ansprüche, mit einem Erdanhebsorgan das sich etwa senkrecht zu dem Fahrsinn (A) der Maschine erstreckt, dadurch gekennzeichnet, dass diese Erdanhebsorgan (10) um eine etwa horizontale Achse rotierend angetrieben ist, sodass die Erde die es vom Erdboden anhebt, über seine Drehachse geht, eine Walze (23) die hinter dem Erdanhebsorgan (10) liegt und dessen Achse sich etwa parallel zu der Achse des Erdanhebsorgans (10) erstreckt, Mitteln (25) um Körner oder Saat (26) hinter der Walze (23) abzulegen und Mitteln (15, 37, 38, 39, 44, 45) die geeignet sind, die an der Vorderseite der Maschine angehobenen Erde hinter den Mitteln (25), die geeignet sind Körner oder Saat abzulegen, gegen den Erdboden zu leiten.

7. Maschine nach Anspruch 6, dadurch gekennzeichnet, dass das Erdanhebsorgan (10) Schaufeln (12) besitzt, die geeignet sind Erde anzuheben.

8. Maschine nach Anspruch 6 oder 7, dadurch gekennzeichnet, dass die Mitteln, die geeignet, sind die angehobene Erde gegen den Erdboden zu leiten, eine Vorrichtung wie ein Rollband (15) besitzen, das sich hinter dem Erdanhebsorgan (10) und mindestens bis über die Walze (23) erstreckt.

9. Maschine nach Anspruch 6 oder 7, dadurch gekennzeichnet, dass die Mitteln, die geeignet sind die angehobene Erde gegen den Erdboden zu leiten, eine Vorrichtung wie ein schwingendes Blech (46) besitzen, das sich hinter dem Erdanhebsorgan (10) und mindestens bis über die Walze (23) erstreckt.

10. Maschine nach Anspruch 6, 7, 8 oder 9, dadurch gekennzeichnet, dass die Mitteln, die geeignet sind die angehobene Erde gegen den Erdboden zu leiten, ein Abweisblech (39) besitzen, das sich hinter der Walze (23) erstreckt und geeignet ist die an der Vorderseite angehobenen Erde gegen den Erdboden niederzuschlagen.

11. Maschine nach Anspruch 10, dadurch gekennzeichnet, dass die Orientierung des Abweisblechs (39) verstellbar ist.

12. Maschine nach einem der Ansprüche 6 bis 11, dadurch gekennzeichnet, dass sie eine Vorrichtung (21) bestitzt, um den Erdstrom, der von der Vorderseite bis zu der Rückseite der Maschine und über die Walze (23) geht, zu kalibrieren.

13. Maschine nach Anspruch 12, dadurch gekennzeichnet, dass die Kalibrierungsvorrichtung (21) verstellbar ist.

14. Maschine nach einem der Ansprüche 6 bis 13, dadurch gekennzeichnet, dass die Mitteln, die geeignet sind Körner oder Saat abzulegen, von Röhren (25) gebildet sind, deren Lage verstellbar ist.

15. Maschine nach einem der Ansprüche 6 bis 14, dadurch gekennzeichnet, dass eine zusätzliche Walze (27) hinter der Maschine vorgesehen ist.

16. Maschine nach einem der Ansprüche 6 bis 15, dadurch gekennzeichnet, dass sie vor dem Erdanhebsorgan (10) Bodenbearbeitungswerkzeuge (7, 30, 42) besitzt, die in den Boden eindringen mit einer grösseren Tiefe als diejenige mit der das Erdanhebsorgan (10) in den Boden eindringt.

17. Maschine nach Anspruch 16, dadurch gekennzeichnet, dass die Bodenbearbeitungswerkzeuge (30, 42) um mindestens eine Achse rotierend angetrieben sind.

18. Maschine nach Anspruch 16 oder 17, dadurch gekennzeichnet, dass sie ein Gitter (43) oder ähnliches besitzt, das sich zwischen dem Erdanhebsorgan (10) und der Bodenbearbeitungswerkzeuge (7, 30, 42) erstreckt.

**Claims**

1. Method of sowing, characterized in that

—a certain quantity of soil is lifted up off the ground
—the ground is tamped after this soil has been lifted off the ground
—seed is deposited on the tamped ground, and
—said seed is covered with the soil which has previously been lifted up off the ground.

2. Method of sowing as claimed in claim 1, characterized in that after a certain quantity of soil has been lifted up off the ground, this quantity of soil is moved so as to pass it over a ground tamping device, and is then deposited onto the tamped ground behind said ground tamping device, and seed is deposited between the ground tamping device and the flow of soil destined to be deposited on the tamped ground.

3. Method of sowing as claimed in claim 1, characterized in that after a certain quantity of soil has been lifted up off the ground, this quantity of soil is thrown to the rear so as to pass it over a ground tamping device, and is then thrown on the tamped ground behind said ground tamping device, and seed is deposited between the ground tamping device and the flow of soil thrown onto said ground.

4. Method of sowing as claimed in any one of the preceding claims, characterized in that the ground is worked at a certain depth before a certain quantity of soil is lifted up off said ground.

5. Method of sowing as claimed in any one of the preceding claims, characterized in that the soil which has been deposited onto the ground, is slightly tamped after the seed has been deposited into said ground.

6. Machine for performing the method as claimed in any one of the preceding claims, provided with a soil lifting up device which extends substantially perpendicularly to the direction of advance (A) of said machine, characterized in that said soil lifting up device (10) is driving in rotation about an axis substantially horizontal, so that the soil which it lifts up, passes over its axis, a roller (23) extending behind said device (10) and whose axis extends substantially parallel to the axis of said soil lifting up device (10), means (25) for delivering corn or seed (26) behind the roller (23) as well as means (15, 37, 38, 39, 44, 45) destined to guide to the ground behind said corn or seed delivering means (25) the soil which has been lifted up at the front of the machine.

7. Machine as claimed in claim 6, characterized in that the soil lifting up device (10) is of the type comprising blades (12) destined to lift up the soil.

8. Machine as claimed in claim 6 or 7, characterized in that the means destined to guide to the ground the soil which has been lifted up, comprises a device of the type band conveyor (15) extending behind the soil lifting up device (10) and at least to the top side of the roller (23).

9. Machine as claimed in claim 6 or 7, characterized in that the means destined to guide to the ground the soil which has been lifted up, comprises a device of the type vibrating hood (46) extending behind the soil lifting up device (10) and at least to the top side of the roller (23).

10. Machine as claimed in claim 6, 7, 8 or 9, characterized in that the means destined to guide to the ground the soil which has been lifted up, comprises a deflector (39) extending behind the roller (23) and destined to put back onto the ground the soil which has been lifted up at the front of the machine.

11. Machine as claimed in claim 10, characterized in that the orientation of the deflector (39) is adjustable.

12. Machine as claimed in any one of claims 6 to 11, characterized in that it comprises a device (21) for calibrating the flow of soil moved from the front to the rear of the machine while passing over the roller (23).

13. Machine as claimed in claim 12, characterized in that the calibrating device (21) is adjustable.

14. Machine as claimed in any one of claims 6 to 13, characterized in that the means for delivering seed are constituted by tubes (25) whose position is adjustable.

15. Machine as claimed in any one of claims 6 to 14, characterized in that a supplementary roller (27) is foreseen at the rear of the machine.

16. Machine as claimed in any one of claims 6 to 15, characterized in that it comprises in front of the soil lifting up device (10) ground working tools (7, 30, 42) destined to enter in the ground at a depth greater than the depth at which the soil lifting up device (10) enters in the soil.

17. Machine as claimed in claim 16, characterized in that the ground working tools (30, 42) are driving in rotation about at least one axis.

18. Machine as claimed in claim 16 or 17, characterized in that it comprises a grid (43) or analogue disposed between the soil lifting up device (10) and the ground working tools (7, 30, 42).

Fig.1

0015800

Fig.2

Fig.3

0 0 1 5 800